# EUROPÄISCHE PATENTANMELDUNG

(11) **EP 1 351 029 A2**
(43) Veröffentlichungstag der Anmeldung: **08.10.2003**
(21) Anmeldenummer: 03007548.5
(22) Anmeldetag: 01.04.2003
(51) Int. Cl.: F25B 49/02

(54) **Verfahren zum Regeln eines Verdichtersatzes**

(30) Priorität: 03.04.2002 DE 10214716
(71) Anmelder: Linde Aktiengesellschaft, 65189 Wiesbaden (DE)
(72) Erfinder: Ernst, Franz-Josef, 53894 Mechernich-Kommern (DE); Gassen, Heinz, 53489 Sinzig (DE); Olejnik, Janusz, 50670 Köln (DE); Schierhorn, Uwe, 50389 Wesseling (DE)
(74) Vertreter: Zahn, Christoph

(57) **Zusammenfassung**

Es wird ein Verfahren zum Regeln eines Verdichtersatzes, aufweisend wenigstens zwei, von Elektromotoren angetriebenen Verdichtem, wobei einem oder mehreren Verdichtem ein Frequenzumrichter zugeordnet ist und/oder zugeordnet werden kann, beschrieben.

Erfindungsgemäß werden der und/oder die Frequenzumrichter, bei dem bzw. bei denen der Strom über einen eingestellten und/oder einstellbaren Maximalwert ansteigt oder ansteigen würde, zumindest so lange abgeschaltet oder bei oder unter dem Maximalwert betrieben oder einem anderen Verdichter zugeordnet, bis mittels geeigneter Maßnahmen wieder ein Unterschreiten des Strommaximalwertes erreicht wird.

## Beschreibung

Die Erfindung betrifft ein Verfahren zum Regeln eines Verdichtersatzes, aufweisend wenigstens zwei, von Elektromotoren angetriebenen Verdichtem, wobei einem oder mehreren Verdichtern ein Frequenzumrichter zugeordnet ist und/oder zugeordnet werden kann.

In gewerblichen und industriellen Kälte-, Klima- und Wärmepumpenanlagen kommen zur Erzeugung der erforderlichen Kälteleistung u. a. Verdichter zum Einsatz. Diese Verdichter werden im Regelfall von Elektromotoren angetrieben. Abhängig von der Größe der Kälte- oder Klimaanlage können auch mehrere Verdichter erforderlich sein, die dann zu einem sog. Verdichtersatz zusammengeschaltet werden.

Bei der Verwendung dieser Verdichtersätze tritt jedoch das Problem auf, dass zum einen die Verdichterleistung an den tageszeitlich stark schwankenden Bedarf angepasst werden muss und zum anderen auch während kurzzeitiger Bedarfsspitzen die für die Kältebereitstellung erforderliche Verdichterleistung erbracht werden muss; Gleiches gilt selbstverständlich auch für den Betrieb von Klima- und Wärmepumpenanlagen.

Um dem vorgenannten Problem zu begegnen, werden im Wesentlichen zwei unterschiedliche Lösungen angewandt. Zum einen wird jedem Verdichter innerhalb des Verdichtersatzes ein eigener Frequenzumrichter zugeordnet. Diese Methode weist zwar eine gute Teillastrate auf, hat jedoch den Nachteil, dass die Investitionskosten vergleichsweise hoch sind.

Zum anderen kommen Verdichtersätze zum Einsatz, die aus zwei oder mehreren unterschiedlichen Verdichtern bestehen, wobei jedoch lediglich einer der Verdichter mittels eines Frequenzumrichters drehzahlgeregelt betrieben wird. Nachteilig bei dieser Verfahrensweise ist jedoch, dass die Verdichter unterschiedlich lange betrieben werden und damit einem unterschiedlichen Verschleiß unterliegen. Des Weiteren weist diese Methode eine geringere Betriebssicherheit auf. Femer ist eine Grundlastumschaltung nicht möglich.

Im Zusammenhang mit den vorgenannten Frequenzumrichtern ist zu beachten, dass deren Betrieb unter kritischen Betriebszuständen vermieden bzw. so kurz als möglich gehalten werden sollte. Unter dem Begriff "kritischer Betriebszustand" ist hierbei jeder Zustand zu verstehen, bei dem ein zu hoher Strom, der sich aus einer zu hohen Leistung des Verdichters ergibt, am Frequenzumrichter anliegt.

Bei Kälte-, Klima- sowie Wärmepumpenanlagen tritt nun jedoch das Problem auf, dass die Nennbetriebspunkte vergleichsweise stark variieren und beispielsweise deutlich von dem jeweiligen Startbetriebspunkt abweichen - beispielhaft seien hier eine sich verringernde Sauggasdichte oder ein sich verringerndes Druckverhältnis genannt. Diese variierenden Betriebsbedingungen führen nun dazu, dass die Frequenzumrichter hinsichtlich des zu verkraftenden Stromes großzügig ausgelegt werden müssen. Diese Überdimensionierung führt zu höheren Investitionskosten. Kritische Betriebszustände treten beispielsweise bei der Erstinbetriebnahme, nach einer Störung - verursacht durch Spannungs-, Verdichter- oder Expansionsventilausfall - oder während des laufenden Betriebes - beispielsweise während oder nach eines Abtauvorganges - auf.

Aufgabe der vorliegenden Erfindung ist es, ein gattungsgemäßes Verfahren zum Regeln eines Verdichtersatzes anzugeben, das die vorgenannten Nachteile vermeidet, insbesondere eine Überdimensionierung des oder der Frequenzumrichter überflüssig macht.

Zur Lösung dieser Aufgabe wird ein gattungsgemäßes Verfahren zum Regeln eines Verdichtersatzes vorgeschlagen, das dadurch gekennzeichnet ist, dass der und/oder die Frequenzumrichter, bei dem bzw. bei denen der Strom über einen eingestellten und/oder einstellbaren Maximalwert ansteigt, zumindest so lange abgeschaltet oder bei dem Maximalwert betrieben oder einem anderen Verdichter zugeordnet wird bzw. werden, bis mittels geeigneter Maßnahmen wieder ein Unterschreiten des Strommaximalwertes erreicht wird.

Erfindungsgemäß können nunmehr Frequenzumrichter vorgesehen werden, die speziell für den bzw. die verwendeten Verdichter ausgelegt sind; ein Überdimensionieren des bzw. der Frequenzumrichter ist erfindungsgemäß nicht mehr erforderlich, da der bzw. jeder der Frequenzumrichter bei Erreichen eines bestimmten Strommaximalwertes abgeschaltet, bei dem Maximalwert betrieben oder einem anderen Verdichter, der bei einer Leistung, die keinen zu hohen Stromfluss verursacht, betrieben wird.

Ein Zu- bzw. Umschalten eines Frequenzumrichters auf den Verdichter, dem er zuvor zugeordnet war, erfolgt erfindungsgemäß frühestens erst dann wieder, wenn mittels geeigneter Maßnahmen wieder ein Unterschreiten des einstellbaren bzw. durch den Frequenzumrichter vorgegebenen Strommaximalwertes erreicht ist.

Hierbei sind eine Vielzahl geeigneter Maßnahmen denkbar, die zur Folge haben, dass ein bestimmter Strommaximalwert wieder unterschritten wird. So können beispielsweise sog. MOP-Ventile mit einem tief liegenden MOP-Punkt verwendet werden. Denkbar ist auch, einzelne Verbraucher teilweise oder vollständig abzuschalten - beispielsweise mittels Magnetventilen.

Unter dem Begriff - Abschalten eines Frequenzumrichters - sei zu verstehen, dass eine Bypass-Schaltung zu dem Frequenzumrichter vorgesehen ist, so dass der einem Frequenzumrichter zugeordnete Verdichter ohne den Frequenzumrichter betrieben werden kann, also in den kritischen Zustand hineinfahren und erst nach Beendigung des kritischen Zustandes wieder mit dem Frequenzumrichter verbunden werden kann.

Als weitere geeignete Maßnahmen, das Unterschreiten eines Strommaximalwertes zu erreichen, sei die Entlastung eines Verdichters, der eine zu große Leistung aufweist, genannt. Eine derartige Entlastung kann beispielsweise mittels einer Zylinderabschaltung bewirkt werden; diese hätte zudem Vorteile im Teillastbetrieb, da der Verdichtersatz mit der Kombination Drehzahlregelung und Zylinderabschaltung bei tieferen Teillastraten betrieben werden kann.

Auch kann der Frequenzumrichterstrom als Regelgröße benutzt werden, um den zugeordneten Verdichter zeitweise oder dauerhaft nur mit der maximal möglichen Drehzahl freizugeben.

Denkbar ist ferner, die Druckdifferenz des Verdichtersatzes dazu zu nutzen, um den oder die Frequenzumrichter kontrolliert freizugeben.

Auch ist eine Verfahrensweise möglich, bei der der Verdichtersatz selbstständig lernt, den Punkt adaptiv zu finden, bei dem er den oder die Frequenzumrichter ab- oder umschalten bzw. wieder freigeben kann. Diese Bestimmung kann mittels geeigneter Prognoserechnungen erfolgen.

Das erfindungsgemäße Verfahren eignet sich für jede Art von Verdränger- und Strömungsverdichter in den Bauweisen hermetisch, halbhermetisch oder offen.

## Patentansprüche

1. Verfahren zum Regeln eines Verdichtersatzes, aufweisend wenigstens zwei, von Elektromotoren angetriebenen Verdichtern, wobei einem oder mehreren Verdichtem ein Frequenzumrichter zugeordnet ist und/oder zugeordnet werden kann, **dadurch gekennzeichnet, dass** der und/oder die Frequenzumrichter, bei dem bzw. bei denen der Strom über einen eingestellten und/oder einstellbaren Maximalwert ansteigt oder ansteigen würde, zumindest so lange abgeschaltet oder bei oder unter dem Maximalwert betrieben oder einem anderen Verdichter zugeordnet wird bzw. werden, bis mittels geeigneter Maßnahmen wieder ein Unterschreiten des Strommaximalwertes erreicht wird.
